# EUROPÄISCHE PATENTSCHRIFT

(11) **EP 3 685 694 B1**
(45) Veröffentlichungstag und Bekanntmachung des Hinweises auf die Patenterteilung: **12.10.2022**
(21) Anmeldenummer: 19153694.5
(22) Anmeldetag: 25.01.2019
(51) Int. Cl.: A41D 1/00, A41D 19/00, G06F 3/01, G06K 7/10

(54) **VORRICHTUNG ZUR ANORDNUNG AN EINER HAND MIT EINEM AN DER VORRICHTUNG ANGEORDNETEN IDENTIFIKATIONSGERÄT SOWIE VERFAHREN ZUR HERSTELLUNG DER VORRICHTUNG**
DEVICE FOR ARRANGING ON A HAND WITH IDENTIFICATION DEVICE ARRANGED ON THE DEVICE AND METHOD FOR MANUFACTURING THE DEVICE
DISPOSITIF DESTINÉ À ÊTRE DISPOSÉ SUR UNE MAIN DOTÉE D'UN APPAREIL D'IDENTIFICATION DISPOSÉ SUR LE DISPOSITIF AINSI QUE PROCÉDÉ DE FABRICATION DE DISPOSITIF

(43) Veröffentlichungstag der Anmeldung: 29.07.2020
(73) Patentinhaber: Feig Electronic GmbH, 35781 Weilburg (DE)
(72) Erfinder: Berlips, Carsten, 35781 Weilburg (DE); Affholderbach, Julian, 35781 Weilburg (DE); Gabel, Werner, 35781 Weilburg (DE); Wennrich, Andreas, 35781 Weilburg (DE); Baum, Alexandra, 04177 Leipzig (DE)
(74) Vertreter: Knefel, Cordula

(56) Entgegenhaltungen:
- DE-A1-102015 214 331
- DE-A1-102016 109 117
- US-A- 5 675 138

## Beschreibung

Die Erfindung betrifft eine Vorrichtung zur Anordnung an einer Hand mit einem an der Vorrichtung angeordneten Identifikationsgerät, wobei die Vorrichtung einen Arbeitshandschuh oder einen an einer Hand anordbaren Tragriemen aufweist mit einem an dem Arbeitshandschuh oder an dem Tragriemen lösbar angeordneten Identifikationsgerät. Darüber hinaus betrifft die Erfindung ein Verfahren zur Herstellung der Vorrichtung.

Zum Stand der Technik (DE 10 2016 109 113 A1) gehört ein Kleidungsstück, insbesondere ein Arbeitskleidungsstück mit einem Handschuh, der eine Innenseite, die beim Tragen des Handschuhs der Hand zugewandt ist, und eine Außenseite aufweist, und bei dem wenigstens ein elektrisches Funktionselement am Handschuh befestigt ist. Darüber hinaus ist eine elektrische Kontaktstelle vorgesehen, zur Integration des Funktionselementes in eine Schaltung und es ist wenigstens ein Kabel vorgesehen, das das Funktionselement mit der Kontaktstelle elektrisch verbindet, wobei das Kabel am Handschuh befestigt ist und überwiegend, insbesondere vollständig in wenigstens einem neutralen Bereich des Handschuhs in Bezug auf Längenänderung bei Bewegung der Hand oder eines Fingers in neutraler Richtung des wenigstens einen neutralen Bereiches verläuft.

Dieses zum Stand der Technik gehörende Kleidungsstück weist den Nachteil auf, dass das Kleidungsstück relativ aufwendig herzustellen ist. Insbesondere müssen die Leitungen zwischen der Kontaktstelle und dem Funktionselement derart verlegt werden, dass sie im neutralen Bereich angeordnet sind. Darüber hinaus ist ein Materialstreifen, insbesondere ein Textilstreifen vorgesehen, wobei das Kabel und/oder das Funktionselement zwischen dem Materialstreifen und dem Handschuh angeordnet ist. Der Materialstreifen kann am Handschuh mittels Heißkleben befestigt sein. Diese Art der Befestigung ist zum anderen sehr starr und zum anderen nicht dauerhaft haltbar.

Beim Bedienen von Maschinen oder beim Auslösen von Lesevorgängen zum Erfassen von Waren oder bei Arbeitsvorgängen, bei denen Geräte über eine Fernbedienung gesteuert werden, oder dergleichen werden in der Praxis Handschuhe oder Tragriemen eingesetzt, an denen Identifikationsgeräte oder sonstige Funktionsgeräte angeordnet sind. Hierbei wird häufig die Betätigung eines mechanischen Schalters benötigt.

Die Handschuhe oder Tragriemen werden häufig in der Logistik eingesetzt, um Waren beispielsweise in Regalen zu scannen, bevor sie dem Regal entnommen werden. Bei Handgeräten, die nicht an einem Arbeitshandschuh oder an einem Tragriemen befestigt sind, müssen diese für jeden Scanvorgang in die Hand genommen werden und nach dem Scanvorgang wieder abgelegt werden. Die Anordnung des Identifikationsgerätes an einem Arbeitshandschuh oder an einem Tragriemen ist schon eine Verbesserung.

Aus der Praxis ist bekannt, dass derartige Handschuhe nur recht aufwendig herzustellen sind. Die elektrischen Leitungen, die starr sind, elektrische Taster, eine Trägerplatine, die die Kontaktstifte für ein Sensormodul trägt, und ein in der Regel aus Kunststoff bestehendes Befestigungselement müssen mechanisch, zum Beispiel durch Kleben oder Aufschweißen mit dem Stoff des Handschuhs verbunden werden. Hierzu ist ein spezielles Know-how erforderlich und es müssen verschiedene Technologien angewendet werden, um den Handschuh herzustellen. Ist der Handschuh defekt und nicht mehr zu gebrauchen, müssen die Teile für das Recycling wieder getrennt werden. Durch die Verbindung vom starren Sensormodul zum flexiblen Textil und den darin angeordnete Leitungen kommt es zu hohem Verschleiß durch Scherbewegungen.

Zum Stand der Technik (DE 10 2015 214 331 A1) gehört eine Scannereinrichtung, die zum Erfassen eines ein- oder zweidimensionalen optischen Codes ausgebildet ist, die ein erstes, einen Scanner aufweisendes Modul aufweist, das mittels einer Halterung auf dem Handrücken eines Benutzers befestigbar oder befestigt ist, sowie ein am Körper des Benutzers tragbares und mit dem ersten Modul zusammenwirkendes zweites Modul, das eine Schnittstelle zur drahtlosen Übertragung von von dem Scanner erfassten Daten aufweist. Diese zum Stand der Technik gehörende Scannereinrichtung wird mit einem Federelement auf dem Handschuh lösbar befestigt. Hierbei muss sichergestellt werden, dass eine elektrische Verbindung zwischen einem Schalter und dem Modul reproduzierbar hergestellt wird. Diese zum Stand der Technik gehörende Vorrichtung weist den Nachteil auf, dass die elektrisch leitfähige Verbindung bei nicht korrektem Einrasten des Federelementes nicht hergestellt wird oder dass bei einem Verschmutzen der elektrischen Kontakte ebenfalls mit großer Häufigkeit keine elektrisch leitfähige Verbindung herstellt wird.

Das der Erfindung zugrunde liegende technische Problem besteht darin, eine Vorrichtung zur Anordnung einer Hand mit einem an der Vorrichtung angeordneten Identifikationsgerät, insbesondere einen Arbeitshandschuh oder einen an einer Hand anordbaren Tragriemen anzugeben, welche in einfachster Art und Weise hergestellt werden kann, die einen niedrigen Fertigungspreis aufweist, die gut recycelbar ist und die darüber hinaus einfach und zuverlässig in der Handhabung ist.

Darüber hinaus soll ein Verfahren zur Herstellung der Vorrichtung angegeben werden, welches preisgünstig ist und mit dem einen langlebige Vorrichtung geschaffen werden kann.

Dieses technische Problem wird mit einer Vorrichtung mit den Merkmalen gemäß Anspruch 1 und durch ein Verfahren mit den Merkmalen des Anspruches 18 gelöst.

Die erfindungsgemäße Vorrichtung zur Anordnung an einer Hand mit einem an der Vorrichtung angeordnetem Identifikationsgerät, wobei die Vorrichtung einen Arbeitshandschuh oder einen an einer Hand anordbaren Tragriemen aufweist, mit einem an dem Arbeitshandschuh oder an dem Tragriemen lösbar angeordneten Identifikationsgerät, bei dem das Identifikationsgerät auf einer einem Handrücken zugeordneten Seite des Arbeitshandschuhs oder des Tragriemens angeordnet ist, und ein Scanvorgang mit dem Identifikationsgerät über einen Schalter auslösbar ist, zeichnet sich dadurch aus,
- dass zwischen dem Schalter und dem Identifikationsgerät eine aus Stoff bestehende Verbindungsleitung vorgesehen ist, wobei in dem Stoff elektrisch leitfähiges Material angeordnet ist,
- dass an dem Identifikationsgerät ein erstes Teil wenigstens eines Druckknopfes angeordnet ist und
- dass an dem Arbeitshandschuh oder dem Tragriemen im Bereich der mit der aus Stoff und dem elektrisch leitfähigen Material bestehenden Verbindungsleitung ein als Gegenstück zum ersten Teil des Druckknopfes ausgebildetes zweites Teil des Druckknopfes angeordnet ist,
- dass das zweite Teil des Druckknopfes mit der aus Stoff bestehenden Verbindungsleitung und mit dem in dem Stoff angeordneten leitfähigen Material eine elektrische Verbindung ausbildet.

Gemäß einer weiteren bevorzugten Ausführungsform der Erfindung ist vorgesehen, dass das Identifikationsgerät einen Schalter zum Betätigen des Identifikationsgerätes aufweist und dass der Schalter als ein aus wenigstens zwei Stofflagen, in denen elektrisch leitfähiges Material angeordnet ist, bestehender Schalter ausgebildet ist.

Die erfindungsgemäße Vorrichtung weist den Vorteil auf, dass die Verbindungsleitung zwischen dem Schalter und dem Identifikationsgerät und, falls vorhanden, der Schalter aus Stoff bestehen, so dass die Teile, die zur Betätigung des Identifikationsgerätes, beziehungsweise die Teile, die zur Herstellung der elektrischen Verbindung mit dem Identifikationsgerät erforderlich sind, auf oder an dem Arbeitshandschuh oder dem Tragriemen aufgenäht oder angenäht werden können. Hierdurch wird eine anderweitige Befestigung, beispielsweise ein Verschweißen oder ein Heißkleben vermieden. Der Arbeitshandschuh oder der Tragriemen bleiben hierdurch sehr flexibel, so dass eine ungehinderte Bewegung der Hand möglich ist. Das Annähen hat darüber hinaus den Vorteil, dass diese Art der Verbindung einfach und ohne großes technisches Know-How hergestellt werden kann und dass diese Art der Verbindung darüber hinaus sehr haltbar ist. Außerdem müssen hierbei nicht unterschiedliche Materialien recycelt werden.

Darüber hinaus weist die erfindungsgemäße Vorrichtung eine Druckknopfverbindung auf. Das Identifikationsgerät weist einen ersten Teil wenigstens eines Druckknopfes auf und an dem Arbeitshandschuh oder dem Tragriemen ist das Gegenstück des Druckknopfes, das heißt der zweite Teil angeordnet. Hierdurch lässt sich die elektrische Verbindung von dem Arbeitshandschuh oder dem Tragriemen zu dem Identifikationsgerät in einfachster Art und Weise herstellen. Hierzu ist der Druckknopf vorteilhaft an dem Arbeitshandschuh oder dem Tragriemen im Bereich der mit der aus Stoff und dem elektrisch leitfähigen Material bestehenden Verbindungsleitung angeordnet.

Der Arbeitshandschuh oder der Tragriemen weist den Vorteil auf, dass für die Herstellung nur Materialien benutzt werden, die ohne zusätzliches technisches Know-how in jeder Näherei leicht verarbeitet werden können.

Gemäß der Erfindung ist vorgesehen, dass das zweite Teil des Druckknopfes mit der aus Stoff bestehenden Verbindungsleitung und mit dem in dem Stoff angeordneten leitfähigen Material eine elektrische Verbindung ausbildet.

Hierdurch ist gewährleistet, dass von dem Schalter über die aus Stoff bestehende Verbindungsleitung, wobei in dem Stoff elektrisch leitfähiges Material angeordnet ist, eine elektrisch leitfähige Verbindung über den Druckknopf und der elektrisch leitfähigen Verbindungsleitung zu dem Identifikationsgerät hergestellt ist. Bis zu dem Druckknopf bestehen der Schalter und die Verbindungsleitung im Wesentlichen aus Stoff, in dem elektrisch leitfähiges Material angeordnet ist. Hierdurch ist gewährleistet, dass die elektrischen Bauteile des Arbeitshandschuhes oder des Tragriemens elastisch sind und die Handhabung des Arbeitshandschuhes oder Tragriemens sowie die Bewegungsfreiheit in keinerlei Maße beeinträchtigen.

Darüber hinaus können diese Teile durch Vernähen mit dem Arbeitshandschuh oder dem Tragriemen an diesen angeordnet werden.

Gemäß einer weiteren Ausführungsform der Erfindung ist vorgesehen, dass der Schalter an einem Finger, insbesondere Zeigefinger des Arbeitshandschuhs oder an einer an einem Finger, insbesondere Zeigefinger befestigbaren Schlaufe des Tragriemens angeordnet ist. Durch diese Ausbildung ist der Schalter mit einem Daumen betätigbar ausgebildet. Es besteht jedoch auch die Möglichkeit, den Schalter an einer Schlaufe eines anderen Fingers (Mittelfinger, Ringfinger oder kleiner Finger) zu befestigen. Ebenso kann der Schalter an dem Arbeitshandschuh an dem Mittelfinger, dem Ringfinger oder dem kleinen Finger angeordnet sein.

Hierzu ist der Schalter vorteilhaft an dem Arbeitshandschuh oder dem Tragriemen im Bereich des Fingers angeordnet, so dass mit dem Daumen durch eine einfache Seitwärtsbewegung der Schalter betätigt werden kann. Der Schalter ist besonders vorteilhaft im Bereich des Fingermittelgelenkes des betreffenden Fingers an dem Arbeitshandschuh oder dem Tragriemen angeordnet. Besonders bevorzugt ist der Schalter seitlich des Fingers an dem Arbeitshandschuh oder dem Tragriemen angeordnet. Die bevorzugte Ausführungsform ist die Anordnung am Zeigefinger.

Gemäß einer weiteren vorteilhaften Ausführungsform der Erfindung ist vorgesehen, dass das elektrisch leitfähige Material in dem Stoff der Verbindungsleitung als wenigstens eine elektrische Leitung ausgebildet ist. Es können ein oder mehrere elektrische Leiter vorgesehen sein. Beispielsweise ist es möglich, einen oder mehrere Metalldrähte oder einen oder mehrere Metallfäden, beispielsweise Litzen vorzusehen.

Gemäß einer weiteren vorteilhaften Ausführungsform der Erfindung ist vorgesehen, dass die wenigstens eine elektrische Leitung kurvenförmig oder mäanderförmig oder wellenlinienförmig oder in Zickzackform oder spiralförmig in der aus Stoff gebildeten Verbindungsleitung angeordnet ist.

Der Stoff ist vorteilhaft dehnbar ausgebildet. Der Stoff kann zumindest in einer Richtung dehnbar ausgebildet sein. Vorteilhaft ist der Stoff in mehreren Richtungen dehnbar ausgebildet. Hierdurch ist gewährleistet, dass der Stoff mit der wenigstens einen integrierten elektrischen Leitung gedehnt werden kann und die Bewegungsfreiheit nicht einschränkt.

Gemäß einer weiteren vorteilhaften Ausführungsform der Erfindung ist vorgesehen, dass der Arbeitshandschuh oder der Tragriemen eine Halterung zum lösbaren Haltern des Identifikationsgerätes aufweist und dass die Halterung aus Stoff besteht.

Diese Ausführungsform weist den Vorteil auf, dass das Identifikationsgerät in einer Art Stofftasche an dem Arbeitshandschuh oder dem Tragriemen angeordnet werden kann. Die Stofftasche weist den Vorteil auf, dass auch die Stofftasche an dem Arbeitshandschuh oder dem Tragriemen mittels eines Nähvorganges befestigt werden kann.

Das Vorsehen von einer oder mehreren Nähten weist den Vorteil auf, dass diese einfach und ohne spezielle Kenntnisse hergestellt werden können, dass sie dauerhaft und haltbar sind und dass der Arbeitshandschuh oder der Tragriemen trotzdem flexibel bleibt.

Gemäß einer weiteren vorteilhaften Ausführungsform der Erfindung ist vorgesehen, dass die Halterung eine verschließbare und öffenbare Lasche aufweist. Mittels dieser Lasche wird das Identifikationsgerät in der Halterung fixiert. Die Lasche kann beispielsweise mittels eines Klettverschlusses oder anderweitiger Verschlussvorrichtungen nach dem Verschließen fixiert werden.

Das Identifikationsgerät kann vorteilhaft als RFID-Lesegerät oder als Barcodelesegerät ausgebildet sein. Ist das Identifikationsgerät als Barcodelesegerät ausgebildet, weist die Lasche vorteilhaft einen Schlitz auf, durch den das Identifikationsgerät optisch Signale erfassen oder aussenden kann.

Eine weitere vorteilhafte Ausführungsform der Erfindung sieht vor, dass das Identifikationsgerät wenigstens einen Taster für die Betätigung und/oder Einstellung des Identifikationsgerätes aufweist. Das Identifikationsgerät wird über wenigstens einen Taster, vorzugsweise zwei oder drei Taster betätigt. Hierüber können Einstellungen an dem Identifikationsgerät vorgenommen werden. Beispielsweise kann ein Betriebsmodus eingestellt werden oder, falls sich das Gerät bei längerer Nichtbenutzung automatisch abschaltet, der Zeitraum bis zum Abschalten. Es besteht auch die Möglichkeit, dass über die Taster eine Bestätigungsanfrage quittiert wird.

Gemäß einer weiteren besonders bevorzugten Ausführungsform der Erfindung ist in dem Identifikationsgerät wenigstens ein Bewegungssensor angeordnet.

Das Identifikationsgerät erfasst über den Bewegungssensor, ob es bewegt wird. Wird es längere Zeit nicht bewegt, schaltet sich das Identifikationsgerät automatisch ab. Hierdurch wird die Akkulaufzeit verlängert.

Eine weitere vorteilhafte Ausführungsform, die nicht Teil der Erfindung ist, sieht vor, dass der Scanvorgang mit dem Identifikationsgerät über eine Handbewegung oder über wenigstens eine Taste auslösbar ist.

Grundsätzlich besteht die Möglichkeit, dass der Scanvorgang über die Betätigung des Schalters ausgelöst wird. Es besteht auch die Möglichkeit, eine Handbewegung auszuführen, und über den Bewegungssensor wird der Scanvorgang ausgelöst.

Eine weitere vorteilhafte Ausführungsform der Erfindung sieht vor, dass die Druckknöpfe als Standarddruckknöpfe ausgebildet sind. Hierdurch wird die Herstellung der erfindungsgemäßen Vorrichtung besonders preiswert.

Die Druckknöpfe können beispielsweise mit einem Zackenring ausgebildet sein. Sie können bei dieser Ausbildung in den Handschuh oder den Tragriemen eingedrückt und verpresst werden. Hierdurch wird auch die elektrische Verbindung mit der aus Stoff bestehenden Verbindungsleitung hergestellt, wobei in dem Stoff das elektrisch leitfähige Material angeordnet ist. Die Zacken des Druckknopfes gelangen in Kontakt mit dem in dem Stoff angeordneten elektrisch leitfähigen Material, so dass eine elektrisch leitfähige Verbindung hergestellt wird.

Eine weitere vorteilhafte Ausführungsform sieht vor, dass in dem ersten Teil des Druckknopfes, der an dem Identifikationsgerät angeordnet ist, eine Schraube angeordnet ist und dass die Schraube als eine in ein an einem oder in einem Gehäuse des Identifikationsgerätes angeordnetes Innengewinde greifend angeordnet ist. Hierdurch ist es möglich, durch die Schraube die Gehäuseteile lösbar fest miteinander zu verbinden. Hierdurch werden Teile eingespart und die Montage ist besonders einfach. Die Schraube kann zum Beispiel einen Außensechskant aufweisen, damit die Schraube mit dem Gehäuseteil verschraubt werden kann.

Eine weitere vorteilhafte Ausführungsform der Erfindung sieht vor, dass der erste Teil des Druckknopfes, der an dem Identifikationsgerät angeordnet ist, mit einer in dem Identifikationsgerät angeordneten Platine in Kontakt stehend ausgebildet ist.

Hierdurch wird gewährleistet, dass eine elektrische Verbindung von dem Schalter über die aus Stoff bestehende Verbindungsleitung, wobei in dem Stoff elektrische leitfähiges Material angeordnet ist, und über den Druckknopf eine elektrisch leitfähige Verbindung von dem Schalter bis zu der Platine besteht. Hierdurch ist es möglich, über den Schalter das Identifikationsgerät zu betätigen.

Gemäß einer weiteren vorteilhaften Ausführungsform der Erfindung ist vorgesehen, dass das Identifikationsgerät wenigstens einen austauschbaren Akkumulator aufweist. Diese Ausbildung weist den Vorteil auf, dass lediglich der Akkumulator, wenn er leer ist, getauscht werden muss, und dass nicht das gesamte Identifikationsgerät ausgetauscht werden muss. Hierdurch kommt der Benutzer mit einer geringeren Anzahl Identifikationsgeräten aus.

Vorteilhaft ist vorgesehen, dass das Identifikationsgerät als RFID-Lesegerät und/oder als RFID Schreib-Lesegerät und/oder als Barcodelesegerät ausgebildet ist. Das Identifikationsgerät kann mit einer RFID-Funktion ausgestattet sein. Das bedeutet, dass das RFID-Gerät Transponder, die beispielsweise an oder in einer Ware angeordnet sind, erfasst. Der Erfassungsvorgang wird über den Schalter, der an der Vorrichtung angeordnet ist, ausgelöst. Hierdurch ist beispielsweise ein Warenverkehr nachvollziehbar. Wird beispielsweise ein in einem Regal angeordnetes Paket von einer Person aus dem Regal genommen, wird das Identifikationsgerät mit der RFID-Funktion ausgelöst und erfasst den Transponder. Die Daten können von dem Identifikationsgerät an eine Zentralstelle, beispielsweise an ein zentrales Steuergerät beispielsweise per Funk übermittelt werden, so dass erfasst wird, dass ein Paket aus dem Regal entnommen wird und welches Paket aus dem Regal entnommen wird.

Gleichermaßen besteht auch die Möglichkeit, dass das Identifikationsgerät eine Elektronik mit einer Barcode-Leseeinrichtung aufweist. Mit diesem Gerät ist es möglich über das Auslesen eines Barcodes an einem Warenpaket dieses zu erfassen. Die Daten können wiederum zu einem zentralen Steuergerät beispielsweise über Funk übermittelt werden.

Es besteht auch die Möglichkeit, die Daten in dem Identifikationsgerät zu speichern und erst bei Anschluss an beispielsweise einen Computer an diesen zu übermitteln.

Gemäß einer besonders bevorzugten Ausführungsform weist das Identifikationsgerät eine Vorrichtung für eine Kommunikation mittels Funk aufweist. Hierdurch ist es möglich, Daten, die das Identifikationsgerät erfasst, unmittelbar über Funk an eine zentrale Erfassungs- und Steuerstelle zu übermitteln.

Das erfindungsgemäße Verfahren zur Herstellung der Vorrichtung nach Anspruch 1 zeichnet sich dadurch aus, dass der Schalter und/oder die Verbindungsleitung und/oder die Halterung für das Identifikationsgerät durch Aufnähen oder Annähen mit dem Arbeitshandschuh oder dem Tragriemen verbunden wird.

Durch die Herstellung, insbesondere der elektrisch leitfähigen Teile, aber auch alternativ oder zusätzlich der Halterung für das Identifikationsgerät ist der Arbeitshandschuh und/oder der Tragriemen besonders einfach herstellbar. Das Aufnähen erfordert kein besonderes technisches Können. Darüber hinaus sind die Nähte haltbar und können flexibel ausgestaltet sein.

Gemäß einer besonders vorteilhaften Ausführungsform des erfindungsgemäßen Verfahrens ist vorgesehen, dass der Arbeitshandschuh oder der an der Hand anordbare Tragriemen ausschließlich oder überwiegend durch Nähen hergestellt wird. Der gesamte Handschuh oder Tragriemen kann prinzipiell ausschließlich durch Nähen hergestellt werden. Es ist jedoch auch möglich, einzelne Teile des Handschuhes oder Tragriemens mittels anderer Verbindungen herzustellen. Der Handschuh oder Tragriemen soll gemäß der Erfindung jedoch überwiegend durch Nähen hergestellt werden.

Gemäß einer weiteren vorteilhaften Ausführungsform der Erfindung ist vorgesehen, dass die Druckknöpfe in den Arbeitshandschuh oder in den Tragriemen eingepresst werden.

Der erfindungsgemäße Arbeitshandschuh oder Tragriemen wird vorteilhaft mit herkömmlichen Druckknöpfen mit Zackenring ausgebildet, die mit der aus Stoff bestehenden Verbindungsleitung mit dem in dem Stoff angeordneten elektrisch leitfähigen Material elektrisch leicht verbunden werden können. Weisen die Druckknöpfe an ihrer Basis einen Zackenring auf, können die Zacken in das textile Material oder durch das textile Material eingedrückt oder durchgedrückt werden. Anschließend werden die Zacken umgebördelt, so dass die Zacken den Druckknopf in oder an dem textilen Material halten. Hierdurch wird eine einfach Verbindung mit der bestehenden Verbindungsleitung und dem elektrisch leitfähigen Material, welches in dem Stoff der Verbindungsleitung angeordnet ist, hergestellt.

An dem Arbeitshandschuh oder Tragriemen befindet sich vorteilhaft ein stoffbasierter elektrischer Taster, der auch einfach eingenäht werden kann und wiederum durch Nähen einfach mit der aus Stoff bestehenden Verbindungsleitung, in der elektrisch leitfähiges Material angeordnet ist, verbunden werden kann.

Das Identifikationsgerät kann mechanisch unter Herstellung einer elektrisch leitfähigen Verbindung in einfacher Art und Weise am Arbeitshandschuh oder Tragriemen befestigt werden, und zwar mittels der Druckknöpfe. Die Druckknöpfe können vorteilhaft vertieft in dem Gerät angeordnet sein, so dass sie neben dem eigentlichen Druckknopf noch eine zusätzliche Führung aufweisen.

Ein weiterer Vorteil besteht darin, dass hierdurch auch die Gesamthöhe des Gerätes reduziert werden kann.

Das Identifikationsgerät wird vorteilhaft in einer Stofftasche, die auf dem Arbeitshandschuh oder dem Tragriemen aufgenäht ist, angeordnet. Diese Stofftasche erfüllt mehrere Aufgaben. Zum einen verhindert die Stofftasche das Verrutschen des Gerätes, zum anderen schützt die Stofftasche das Gerät und die Stofftasche schützt auch die zu verarbeitenden Materialien. Darüber hinaus ist durch die Stofftasche gewährleistet, dass das Identifikationsgerät einfach aus der Halterung in Form der Stofftasche entnommen werden kann.

Gemäß einer besonders bevorzugten Ausführungsform der Erfindung besteht der Arbeitshandschuh oder der Tragriemen ausschließlich aus Materialien, die in jeder Schneiderei leicht verarbeitet werden können.

Das Identifikationsgerät trägt die Gegenstücke der Druckknöpfe des Arbeitshandschuhs oder des Tragriemens. Die Druckknöpfe können als herkömmliche Druckknöpfe ausgebildet sein, die am Gerät befestigt werden. Es besteht auch die Möglichkeit speziell angefertigte Druckknöpfe zu verwenden, die beispielsweise mit einer Schraube versehen sind, um mittels der in den Druckknöpfen innenliegenden Schrauben die Gehäuseteile miteinander zu verschrauben.

Die Druckknöpfe, die an dem Identifikationsgerät angeordnet sind, dienen in erster Linie der elektrischen Anschlussfunktion innerhalb des Gerätes.

Wie schon ausgeführt, besteht das Identifikationsgerät vorteilhaft aus einer Elektronik mit Barcode-Leseeinheit oder ist als RFID-Lesegerät oder RFID-Schreib-/Lesegerät ausgebildet. Das RFID-Lesegerät wird vorteilhaft mit dem Stofftaster des Arbeitshandschuhes oder des Tragriemens bedient. Das Identifikationsgerät kann grundsätzlich jedoch auch über Tasten am Gerät bedient werden.

Gemäß einer vorteilhaften Ausführungsform der Erfindung beinhaltet das Gerät wenigstens einen Beschleunigungssensor, der das Gerät automatisch abschaltet, wenn das Gerät längere Zeit nicht bewegt wird. Der Beschleunigungssensor kann auch zum Auswerten von Bewegungen und daraus abgeleitete spezielle Funktionen, wie zum Beispiel das Einschalten des Gerätes benutzt werden.

Das Identifikationsgerät verfügt vorteilhaft über eine Funkfunktion zur Kommunikation mit wenigstens einem anderen Gerät, beispielsweise einem Steuer- und Lesegerät oder einem Computer, um die Daten aus dem Identifikationsgerät auslesen oder um Updates in das Identifikationsgerät laden zu können. Das Identifikationsgerät kann jedoch alternativ oder zusätzlich über eine kabelgebundene Verbindung mit dem anderen Gerät, beispielsweise dem Steuer- und Lesegerät oder dem Computer verbunden werden.

Das Identifikationsgerät weist vorteilhaft verschiedenfarbige LEDs unterschiedlicher Helligkeit zur Signalisierung von Alarm und Status auf. Weitere Rückmeldungen an den Benutzer können haptisch und/oder akustisch erfolgen. Vorteilhaft wird das Identifikationsgerät über einen Akkumulator mit Strom versorgt, der vorteilhaft leicht vom Benutzer mit einer Hand und ohne Werkzeug gewechselt werden kann.

Die Halterung an dem Arbeitshandschuh oder dem Tragriemen kann derart ausgebildet sein, dass der Akkumulator gewechselt werden kann, wenn sich das Identifikationsgerät in der Halterung des Arbeitshandschuhs oder des Tragriemens befindet.

Es besteht auch die Möglichkeit, den Tragriemen über einen Handschuh, beispielsweise einem Arbeitshandschuh oder einem lediglich wärmenden Handschuh zu tragen. Dies ist insbesondere möglich, da der Tragriemen vorteilhaft größenverstellbar ausgebildet ist.

Weitere Merkmale und Vorteile der Erfindung ergeben sich anhand der zugehörigen Zeichnungen, in denen mehrere Ausführungsbeispiele einer erfindungsgemäßen Vorrichtung dargestellt sind, ohne die Erfindung auf diese Ausführungsbeispiele zu beschränken. In den Zeichnungen zeigen:
- Fig. 1: eine Hand mit einem Tragriemen in Ansicht in Richtung Handrücken;
- Fig. 2: eine Hand mit einem Tragriemen in Ansicht in Richtung die Handfläche;
- Fig. 3: einen Arbeitshandschuh in Draufsicht;
- Fig. 4: einen erfindungsgemäßen Tragriemen in Draufsicht;
- Fig. 5: eine Halterung für das Identifikationsgerät im Querschnitt;
- Fig. 6: einen Querschnitt durch ein Identifikationsgerät mit Druckknopf;
- Fig. 7: einen Teil des Druckknopfes gemäß Fig. 6 in Seitenansicht;
- Fig. 8: einen Stoffschalter im Querschnitt;
- Fig. 9: eine Darstellung der Verbindung vom Stoffschalter bis zu den Druckknöpfen in Draufsicht;
- Fig. 10: eine Verbindungsleitung mit elektrisch leitfähiger Litze in Draufsicht;
- Fig. 11: eine Verbindungsleitung mit mäanderförmig angeordneter elektrischer Leitung in Draufsicht;
- Fig. 12: eine Verbindungsleitung mit zickzackförmig angeordneter elektrischer Leitung in Draufsicht;
- Fig. 13: ein Identifikationsgerät in perspektivischer Ansicht.

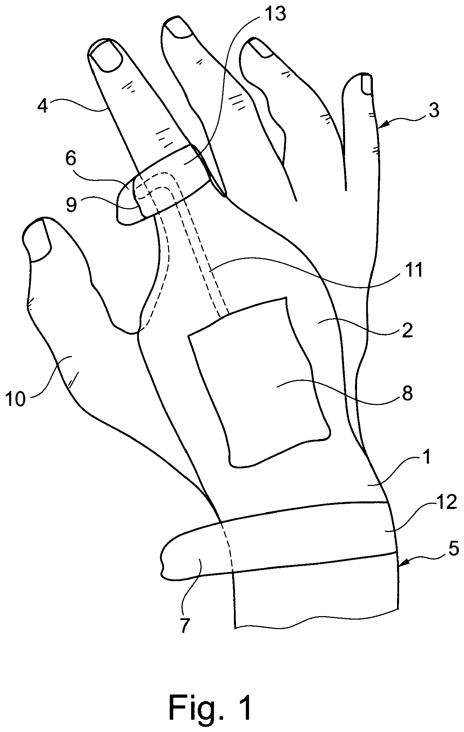

Fig. 1 zeigt eine Vorrichtung 1, die als Tragriemen 2 ausgebildet ist und an einer Hand 3 eines Trägers angeordnet ist. Der Tragriemen 2 ist im Bereich eines Zeigefingers 4 an der Hand 3 lösbar befestigt. Ebenso ist der Tragriemen 2 im Bereich eines Unterarmes oder Handgelenkes 5 befestigt. Der Tragriemen 2 weist hierzu Verschlüsse 6, 7, die beispielsweise als Klettverschlüsse ausgebildet sind, auf. Auf dem Tragriemen 2 ist ein Identifikationsgerät 8 angeordnet, welches beispielsweise als RFID-Lesegerät oder Barcodelesegerät ausgebildet ist.

Mit dem Identifikationsgerät 8 können Waren (nicht dargestellt), die beispielsweise in einem Regal angeordnet sind, elektronisch erfasst werden. Es besteht beispielsweise die Möglichkeit, dass die Ware einen Transponder aufweist, der von dem als RFID-Lesegerät ausgebildeten Identifikationsgerät 8 erfasst werden kann. Um den Scanvorgang zu starten, ist an dem Tragriemen 2 im Bereich des Zeigefingers 4 ein Schalter 9 angeordnet. Der Schalter 9 ist derart an dem Tragriemen 2 im Bereich des Zeigefingers 4 angeordnet, dass er mit einem Daumen 10 problemlos durch Drücken betätigt werden kann. Von dem Schalter 9 führt eine elektrische Verbindungsleitung 11 zu dem Identifikationsgerät 8. Der Tragriemen 2 ist überwiegend aus Stoff gebildet. Lediglich die Verschlüsse 6, 7 sind als Klettverschlüsse mit einem Flausch- und einem gegenüberliegend angeordneten Hakenband ausgebildet. Die Verbindungsleitung 11 ist ebenfalls aus Stoff gebildet und in dem Stoff sind elektrisch leitfähige Materialien angeordnet.

Das Identifikationsgerät 8 ist ebenfalls in einer Stofftasche, die noch näher beschrieben wird, angeordnet.

Die Vorrichtung 1 wird für die Durchführung der Scanvorgänge mit dem Identifikationsgerät an der Hand 3 angeordnet werden. Die Transponder oder Barcodes können mit dem Identifikationsgerät 8 erfasst werden.

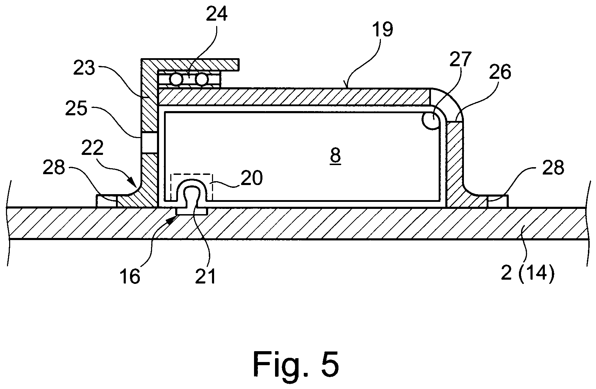

Das Identifikationsgerät 8 kann von dem Tragriemen 2 entfernt werden, indem es aus der in Fig. 5 noch näher beschriebenen Halterung entnommen wird. Der Tragriemen 2 kann dann gewaschen oder gereinigt werden. Der Tragriemen 2 weist darüber hinaus den Vorteil auf, dass sämtliche Teile, wie der Schalter 9, der als Stoffschalter ausgebildet ist, die Verbindungsleitung 11, die ebenfalls aus Stoff gebildet ist, und die Halterung für das Identifikationsgerät 8, die ebenfalls aus Stoff besteht, vollständig aus Stoff gebildet sind und sämtliche Verbindungen durch einen oder mehrere Nähvorgänge hergestellt werden können.

Der Tragriemen 2 wird mit einer Schlaufe 12 am Handgelenk oder Unterarm 5 angeordnet und mit dem Verschluss 7 größenverstellbar, das heißt angepasst an die Trägerperson verschlossen. Darüber hinaus ist der Tragriemen mit einer Schlaufe 13 am Zeigefinger befestigt. Auch diese Schlaufe 13 ist größenverstellbar durch den Verschluss 6 an die Trägerperson anpassbar.

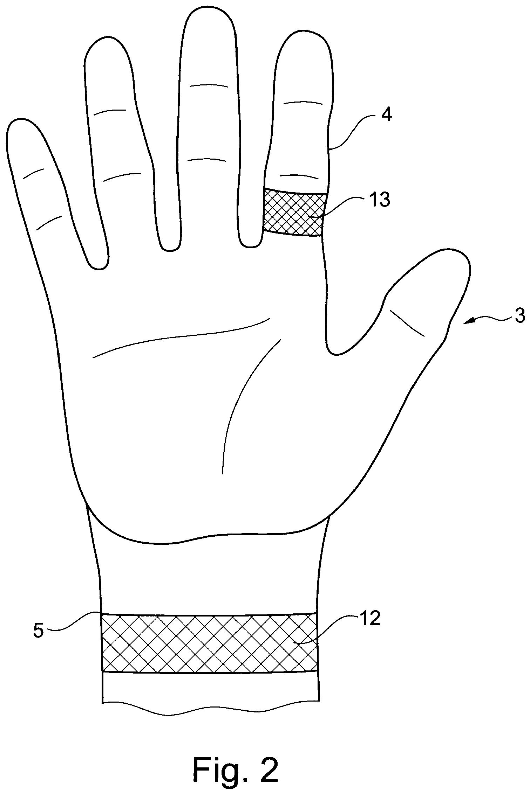

Gemäß Fig. 2 ist die Hand 3 in Ansicht in Richtung Handfläche dargestellt. Die Schlaufen 12, 13 des Tragriemens 2 umschließen den Unterarm oder das Handgelenk 5 ebenso den Zeigefinger 4.

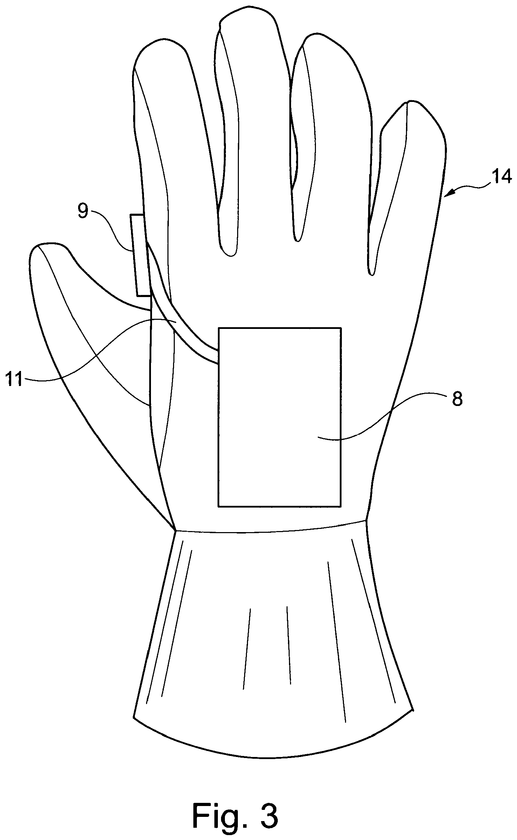

Fig. 3 zeigt ein geändertes Ausführungsbeispiel mit einem Arbeitshandschuh 14. Auf dem Arbeitshandschuh 14 ist das Identifikationsgerät 8 vorzugsweise in einer Stofftasche (in Fig. 3 nicht dargestellt) angeordnet. Der Arbeitshandschuh 8 weist ebenfalls den Schalter 9, der vorteilhaft als Stoffschalter ausgebildet ist, auf sowie die Verbindungsleitung 11, die ebenfalls aus Stoff besteht mit in dem Stoff integriertem elektrisch leitfähigen Material.

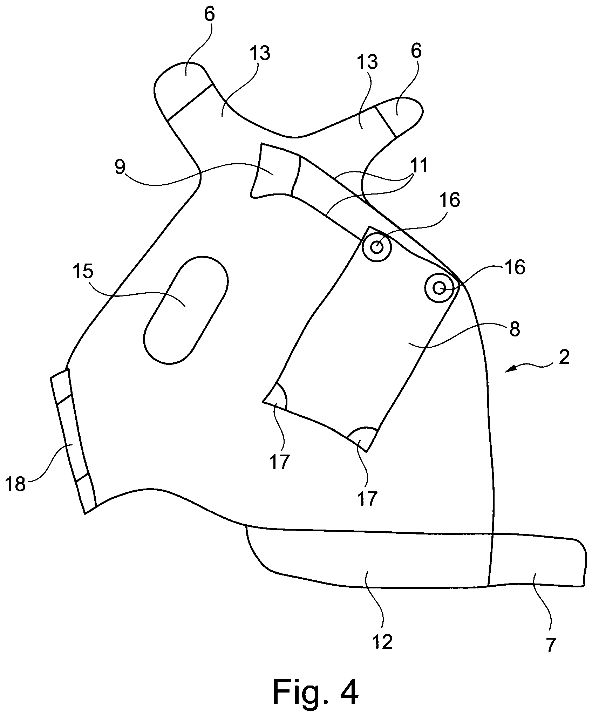

Fig. 4 zeigt den Tragriemen 2 mit der Schlaufe 12 und dem Verschluss 7, die im Bereich des Handgelenkes/Unterarmes 5 anordbar sind. Darüber hinaus ist die Schlaufe 13 mit dem Verschluss 6 dargestellt. Die Schlaufe 13 umschließt den Zeigefinger, wie in Fig. 1 dargestellt.

In der in Fig. 4 dargestellten Ausführungsform ist eine Öffnung 15 für den Daumen 10 (in Fig. 4 nicht dargestellt) vorgesehen. Durch diese Ausführungsform gemäß Fig. 4 erhält der Tragriemen 2 einen besseren und festeren Sitz an der Hand 3.

An dem Tragriemen 2 ist das Identifikationsgerät 8 angeordnet, welches in einer Stofftasche, die in Fig. 5 beschrieben wird, eingeschoben ist. Von dem Identifikationsgerät 8 führen textile, flexible, elektrische Verbindungsleitungen 11 zu dem Schalter 9, der ebenfalls als Stoffschalter oder als Stofftaster ausgebildet ist. Die Verbindungsleitungen 11 führen zu Druckknöpfen 16 und stehen mit diesen in elektrischer Verbindung. Erste Teile der Druccknöpfe 16 sind zum einen in dem Tragriemen 2 angeordnet. Die Gegenstücke, das heißt die zweiten Teile der Druckknöpfe 16 sind in dem Identifikationsgerät 8 angeordnet. Durch das Zusammenführen der Druckknöpfe 16 wird der elektrische Kontakt zwischen dem Identifikationsgerät 8 und den elektrisch leitfähigen Verbindungsleitungen 11 zu dem Schalter 9 hergestellt. In der noch näher zu beschreibenden Stofftasche sind Aussparungen 17 für beispielsweise LEDs oder Taster des Identifikationsgerätes 8 vorgesehen.

Der Tragriemen 2 weist darüber hinaus eine Lasche 18 auf.

Fig. 5 zeigt den Tragriemen 2 oder den Arbeitshandschuh 14. Auf dem Tragriemen 2 oder Arbeitshandschuh 14 ist eine Stofftasche 19 angeordnet. In der Stofftasche 19 ist das Identifikationsgerät 8 angeordnet. Das Identifikationsgerät 8 weist einen ersten Teil 20 (weiblich) eines Druccknopfes 16 auf. In dem Tragriemen 2 oder dem Arbeitshandschuh 14 ist ein zweiter Teil 21 (männlich) des Druckknopfes 16, das heißt das Gegenstück zu dem ersten Teil 20 (weiblich) vorgesehen. Die beiden Teile 20, 21 des Druccknopfes 16 sind in Kontakt gebracht, so dass das Identifikationsgerät 8 zum einen über den Druckknopf 16 und zum anderen in der Stofftasche 19 an dem Tragriemen oder dem Arbeitshandschuh fixiert wird. Die Stofftasche 19 umschließt das Identifikationsgerät 8 bis auf eine Vorderseite 22. In diesem Bereich ist eine Lasche 23 vorgesehen, die ebenfalls mit einem Verschluss, der beispielsweise als Klettverschluss 24 ausgebildet ist, verschlossen werden kann. In der Lasche 23 ist ein Schlitz 25 vorgesehen. Ist das Identifikationsgerät 8 als Barcodeleser ausgebildet, kann durch den Schlitz 25 ein Barcode gescannt werden.

In der Stofftasche 19 ist darüber hinaus eine Öffnung 26 vorgesehen. Die Öffnung 26 korrespondiert mit einer LED 27 des Identifikationsgerätes 8, so dass die LED 27 von außen erkennbar ist. Es kann im Bereich der Öffnung 26 auch ein Schalter (nicht dargestellt) in dem Identifikationsgerät 8 angeordnet sein.

Die Stofftasche 19 wie auch die Lasche 23 sind mittels Nähten 28 an dem Tragriemen 2 oder dem Arbeitshandschuh 14 befestigt.

Der zweite Teil 21 (männlicher Teil) des Druckknopfes 16 kann in dem Tragriemen 2 oder dem Arbeitshandschuh 14 eingepresst sein. Es können Druckknöpfe 16 mit Zackenring verwendet werden, die mit dem elektrisch leitfähigen Material (in Fig. 5 nicht dargestellt) in der Verbindungsleitung 11 in einfacher Art und Weise verbunden werden können.

Wie in Fig. 5 zu erkennen ist, ist der erste Teil 20 (weiblicher Teil) des Druckknopfes 16 in dem Identifikationsgerät 8 versenkt angeordnet. Hierdurch wird die Gesamthöhe des Identifikationsgerätes reduziert. Darüber hinaus ist noch eine zusätzliche Führung für den zweiten Teil 21 (männlicher Teil) des Druckknopfes 16 gegeben.

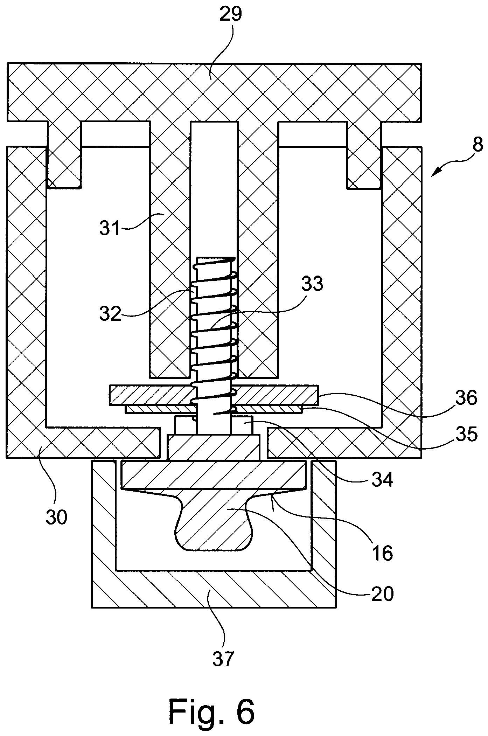

Gemäß Fig. 6 ist das Identifikationsgerät 8 dargestellt, welches eine obere Gehäuseschale 29 und eine untere Gehäuseschale 30 aufweist. Die obere Gehäuseschale 29 weist einen Zapfen 30 mit einem Innengewinde 31 auf. In das Innengewinde 31 greift eine Schraube 33, die durch den ersten Teil 20 des Druckknopfes 16 greift. Darüber hinaus ist eine Federscheibe 34 vorgesehen sowie eine Kontaktfläche 35 einer Leiterplatte 36. Über den ersten Teil 20 des Druckknopfes 16 kann damit zum einen eine elektrisch leitfähige Verbindung zu der Leiterplatte 36 hergestellt werden. Zum anderen greift die Schraube 33 in das Innengewinde 32 des Zapfens 31 der oberen Gehäuseschale 29, so dass die obere Gehäuseschale 29 und die untere Gehäuseschale 30 des Identifikationsgerätes 8 lösbar fest miteinander verbunden werden. Die Schraube 33 kann mittels eines Werkzeuges, beispielsweise eines Steckschlüssels 37 betätigt werden.

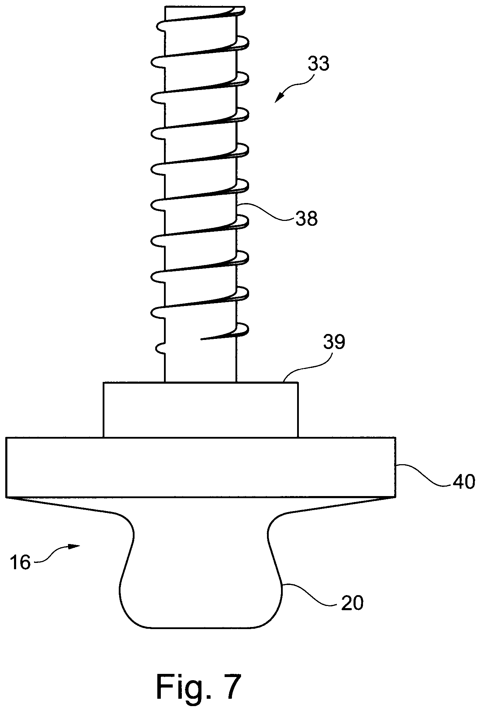

Fig. 7 zeigt die Schraube 33 mit einem Gewinde 38. Die Schraube 33 weist ebenfalls eine Kontaktfläche 39 auf, um einen elektrischen Kontakt mit der Kontaktfläche 35 der Leiterplatte 36 herzustellen. Darüber hinaus ist ein Werkzeugansatz 40 vorgesehen, um die Schraube 33 mit einem Werkzeug 37 betätigen zu können. Darüber hinaus ist ein erster Teil des Druckknopfes 16 an der Schraube 33 angeordnet.

Wie den Fig. 5, 6 und 7 zu entnehmen ist, können die ersten und zweiten Teile 20, 21 (weiblicher und männlicher Teil) des Druckknopfes 16 beliebig an dem Identifikationsgerät 8 und dem Arbeitshandschuh 14 oder dem Tragriemen 2 angeordnet sein.

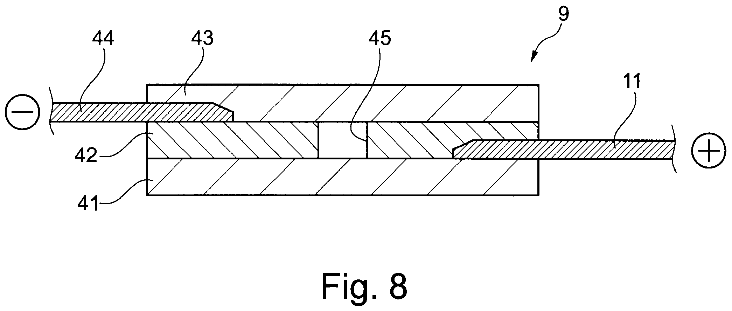

Fig. 8 zeigt den Schalter 9, der aus mehreren Lagen 41 bis 43 besteht. Die Lage 41 stellt eine erste textile Elektrode mit angenähter Verbindungsleitung 11 dar. Die Schicht 43 stellt eine zweite textile Elektrode mit angenähter Verbindungsleitung 44 dar. Die Schicht 42 ist eine Pufferschicht, die einen Ausschnitt 45 aufweist. Wird auf den textilen Schalter 9 ein Druck ausgeübt, gelangen die Schichten 41, 43 in Kontakt und es wird eine elektrische Verbindung hergestellt.

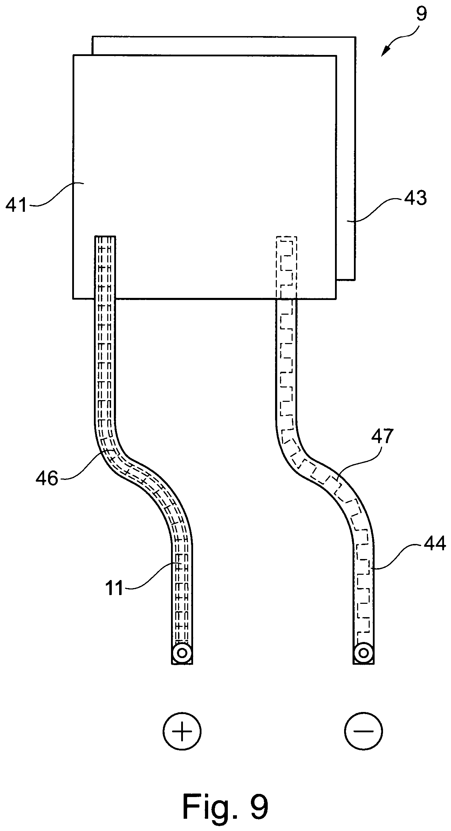

Fig. 9 stellt den Stoffschalter 9 noch einmal dar mit den angenähten Verbindungsleitungen 11 und 44 sowie den Elektroden 41 und 43. Die Zwischenschicht 42 ist in Fig. 9 nicht mehr dargestellt. Die Verbindungsleitungen 11, 44 sind beispielhaft dargestellt mit den in den Verbindungsleitungen 11, 44, die aus Stoff bestehen, angeordneten elektrischen Leitungen. In der Verbindungsleitung 11 ist die elektrische Leitung 46 mäanderförmig angeordnet. In der Verbindungsleitung 44 ist die elektrische Leitung beispielhaft als Geflecht, bestehend aus Litzen, ausgebildet.

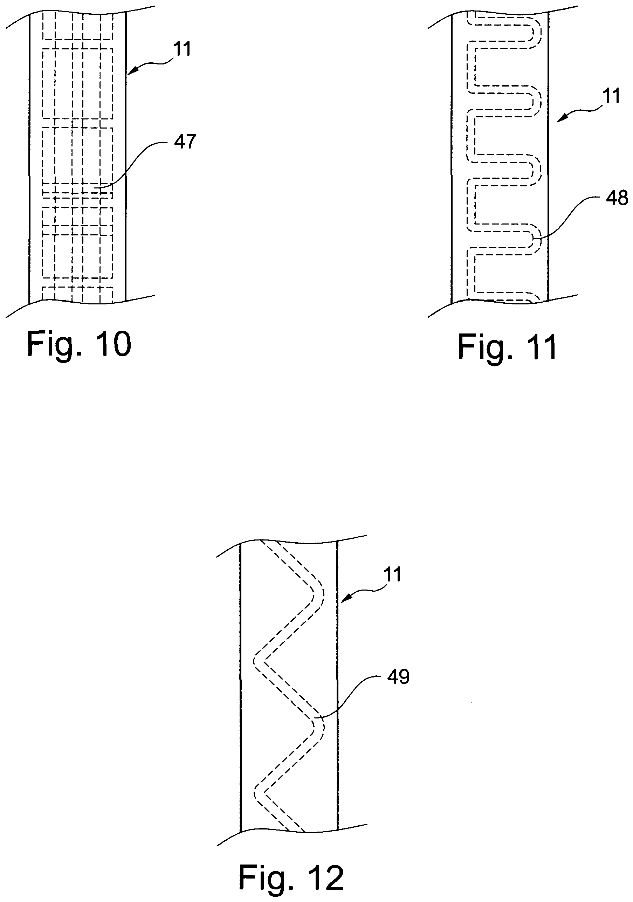

Weitere Beispiele für die Anordnung von elektrischen Leitungen in den Verbindungsleitungen 11 sind in den Fig. 10 bis 12 dargestellt.

In Fig. 10 ist noch einmal die Anordnung als Geflecht 47 mit Litzen dargestellt.

In Fig. 11 ist eine elektrische Leitung 48 mäanderförmig in der Verbindungsleitung 11 angeordnet.

Gemäß Fig. 12 ist eine elektrische Leitung 49 in der Verbindungsleitung 11 zickzackförmig angeordnet.

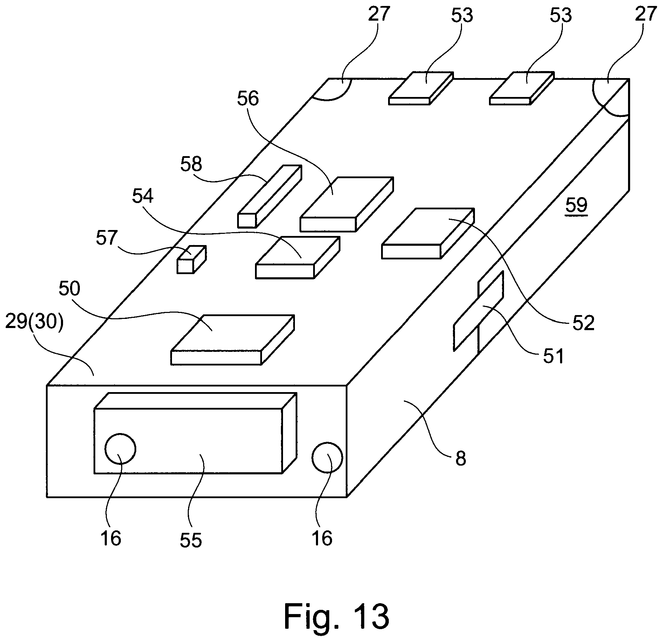

Fig. 13 zeigt das Identifikationsgerät 8, welches einen Akkumulator 59 aufweist. Der Akkumulator 59 ist Teil des Gehäuses 29, 30, welches als zweigeteiltes Gehäuse (in Fig. 13 nicht dargestellt), ausgebildet ist. Der Akkumulator 59 lässt sich über eine Entriegelungstaste 51 von dem Identifikationsgerät 8 trennen. Das Identifikationsgerät 8 bildet über die Druckknöpfe 16 mechanisch und elektrisch eine Schnittstelle nach außen aus. Über ein integriertes Funkmodul 52 erfolgt die Funkkommunikation nach außen. Das Identifikationsgerät 8 kann über Tasten 53 und einen Beschleunigungssensor 54 beziehungsweise über äußere Schnittstellen eingestellt und bedient werden. Mittels einer Barcodeeinheit 55 oder einer RFID-Einheit 56 erfolgt das Lesen von Barcodes beziehungsweise das Scannen von RFID-Transpondern. Eine Einstellung des Identifikationsgerätes 8 kann ebenfalls über die Barcodeeinheit 55 oder die RFID-Einheit 56 erfolgen. Der Benutzer kann Rückmeldungen in akustischer Form über einen Lautsprecher 57, optisch über die LED's 27 oder haptisch über eine Vibrationseinheit 58 erhalten. Das Identifikationsgerät kann noch weitere elektronische Bauteile aufweisen, wobei lediglich beispielhaft ein Bauteil 50 dargestellt ist.

Das Identifikationsgerät 8 ist ohne den Tragriemen 2 voll funktionsfähig. Es kann über Tasten 53 oder den Beschleunigungssensor 54 aktiviert werden. In diesem Fall dienen die Druckknöpfe 16 der mechanischen Befestigung. Sie können jedoch auch zum Beispiel zum Aufladen des Identifikationsgerätes 8 benutzt werden. Der Vorteil der Druckknöpfe 16 ist, dass diese für Stoff vorgesehen und somit leicht im Stoff befestigt werden können.

Das Identifikationsgerät 8 besteht aus einer Kombination von Barcode- und RFID-Scaneinrichtung, wobei auch ein Einzelbetrieb möglich ist.

Die Bauteile 50, 52, 54, 55, 56, 57, 58 sind lediglich schematisch dargestellt. Diese Bauteile sind innerhalb des Identifikationsgerätes 8 angeordnet.

### Bezugszahlen

- 1: Vorrichtung
- 2: Tragriemen
- 3: Hand
- 4: Zeigefinger
- 5: Unterarm/Handgelenk
- 6: Verschluss
- 7: Verschluss
- 8: Identifikationsgerät
- 9: Stoffschalter
- 10: Daumen
- 11: Verbindungsleitung
- 12: Schlaufe
- 13: Schlaufe
- 14: Arbeitshandschuh
- 15: Öffnung
- 16: Druckknöpfe
- 17: Aussparung
- 18: Lasche
- 19: Stofftasche
- 20: erster Teil des Druckknopfes 16
- 21: zweiter Teil des Druckknopfes 16
- 22: Vorderseite der Tasche 19
- 23: Lasche
- 24: Verschluss
- 25: Schlitz
- 26: Öffnung
- 27: LED
- 28: Nähte
- 29: obere Gehäuseschale
- 30: untere Gehäuseschale
- 31: Zapfen
- 32: Innengewinde
- 33: Schraube
- 34: Federscheibe
- 35: Kontaktfläche Leiterplatte
- 36: Leiterplatte
- 37: Werkzeug
- 38: Gewinde
- 39: Kontaktfläche
- 40: Werkzeugansatz
- 41: Lage des Stoffschalters 9
- 42: Lage des Stoffschalters 9
- 43: Lage des Stoffschalters 9
- 44: Verbindungsleitung
- 45: Ausschnitt
- 46: elektrische Leitung
- 47: elektrische Leitung
- 48: elektrische Leitung
- 49: elektrische Leitung
- 50: elektronisches Bauteil
- 51: Entriegelungstaste
- 52: integriertes Funkmodul
- 53: Tasten
- 54: Beschleunigungssensor
- 55: Barcodeeinheit
- 56: RFID-Einheit
- 57: Lautsprecher
- 58: Vibrationseinheit
- 59: Akkumulator

## Patentansprüche

1. Vorrichtung (1) zur Anordnung an einer Hand (3) mit einem an der Vorrichtung (1) angeordnetem Identifikationsgerät (8), wobei die Vorrichtung (1) einen Arbeitshandschuh (14) oder einen an der Hand (3) anordbaren Tragriemen (2) aufweist, mit einem an dem Arbeitshandschuh (14) oder an dem Tragriemen (2) lösbar angeordneten Identifikationsgerät (8), bei dem das Identifikationsgerät (8) auf einer einem Handrücken zugeordneten Seite des Arbeitshandschuhs (14) oder des Tragriemens (2) angeordnet ist, und ein Scanvorgang mit dem Identifikationsgerät (8) über einen Schalter (9) auslösbar ist,
**dadurch gekennzeichnet,**
- **dass** zwischen dem Schalter (9) und dem Identifikationsgerät (8) eine aus Stoff bestehende Verbindungsleitung (11, 44) vorgesehen ist, wobei in dem Stoff elektrisch leitfähiges Material (46, 47, 48, 49) angeordnet ist,
- **dass** an dem Identifikationsgerät (8) ein erstes Teil (20) wenigstens eines Druckknopfes (16) angeordnet ist, und dass an dem Arbeitshandschuh (14) oder dem Tragriemen (2) im Bereich der mit der aus Stoff und dem elektrisch leitfähigen Material bestehenden Verbindungsleitung (11, 44) ein als Gegenstück zum ersten Teil (20) des Druckknopfes (16) ausgebildetes zweites Teil (21) des Druckknopfes (16) angeordnet ist,
- **dass** das zweite Teil (21) des Druckknopfes (16) mit der aus Stoff bestehenden Verbindungsleitung (11, 44) und mit dem in dem Stoff angeordneten leitfähigen Material (46, 47, 48, 49) eine elektrische Verbindung ausbildet.

2. Vorrichtung nach Anspruch 1, **dadurch gekennzeichnet, dass** das Identifikationsgerät den Schalter (9) zum Betätigen des Identifikationsgerätes (8) aufweist und dass der Schalter (9) als ein aus wenigstens zwei Stofflagen (41, 42, 43), in denen elektrisch leitfähiges Material angeordnet ist, bestehender Schalter (9) ausgebildet ist.

3. Vorrichtung nach einem der vorhergehenden Ansprüche, **dadurch gekennzeichnet, dass** der Schalter (9) an einem Finger, insbesondere Zeigefinger des Arbeitshandschuhs (14) oder an einer an einem Finger, insbesondere Zeigefinger befestigbaren Schlaufe (13) des Tragriemens (2) angeordnet ist.

4. Vorrichtung nach einem der vorhergehenden Ansprüche, **dadurch gekennzeichnet, dass** das elektrisch leitfähige Material in dem Stoff der Verbindungsleitung (11, 44) als wenigstens eine elektrische Leitung (46, 47, 48, 49) ausgebildet ist.

5. Vorrichtung nach Anspruch 4, **dadurch gekennzeichnet, dass** die wenigstens eine elektrische Leitung (46, 47, 48, 49) kurvenförmig oder mäanderförmig oder wellenlinienförmig oder in Zickzackform oder spiralförmig in der aus Stoff gebildeten Verbindungsleitung (11, 44) angeordnet ist.

6. Vorrichtung nach einem der vorhergehenden Ansprüche, **dadurch gekennzeichnet, dass** der Arbeitshandschuh (14) oder der Tragriemen (2) eine Halterung (19) zum lösbaren Haltern des Identifikationsgerätes (8) aufweist, und dass die Halterung (19) aus Stoff besteht.

7. Vorrichtung nach Anspruch 6, **dadurch gekennzeichnet, dass** die Halterung (19) eine verschließbare und öffenbare Lasche (18) aufweist.

8. Vorrichtung nach Anspruch 7, **dadurch gekennzeichnet, dass** die Lasche (18) einen Schlitz (25) aufweist.

9. Vorrichtung nach einem der vorhergehenden Ansprüche, **dadurch gekennzeichnet, dass** das Identifikationsgerät (8) wenigstens einen Taster für die Betätigung und/oder Einstellung des Identifikationsgerätes (8) aufweist.

10. Vorrichtung nach einem der vorhergehenden Ansprüche, **dadurch gekennzeichnet, dass** in dem Identifikationsgerät (8) wenigstens ein Bewegungssensor angeordnet ist.

11. Vorrichtung nach einem der vorhergehenden Ansprüche, **dadurch gekennzeichnet, dass** die Druckknöpfe (16) als Standarddruckknöpfe ausgebildet sind.

12. Vorrichtung nach einem der Ansprüche 1 bis 10, **dadurch gekennzeichnet, dass** in dem ersten Teil (20) des Druckknopfes (16), der an dem Identifikationsgerät (8) angeordnet ist, eine Schraube (33) angeordnet ist, und dass die Schraube (33) in ein an oder in einem Gehäuse (29) des Identifikationsgerätes (8) angeordnetes Innengewinde (32) greifend anordbar ist.

13. Vorrichtung nach einem der vorhergehenden Ansprüche, **dadurch gekennzeichnet, dass** der erste Teil (20) des Druckknopfes (16), der an dem Identifikationsgerät (8) angeordnet ist, mit einer in dem Identifikationsgerät angeordneten Leiterplatte (36) in elektrischem Kontakt stehend ausgebildet ist.

14. Vorrichtung nach einem der vorhergehenden Ansprüche, **dadurch gekennzeichnet, dass** das Identifikationsgerät (8) wenigstens einen austauschbaren Akkumulator (59) aufweist.

15. Vorrichtung nach einem der vorhergehenden Ansprüche, **dadurch gekennzeichnet, dass** das Identifikationsgerät (8) als RFID-Lesegerät und/oder als RFID-Schreib-/Lesegerät und/oder als Barcode-Lesegerät ausgebildet ist.

16. Vorrichtung nach einem der vorhergehenden Ansprüche, **dadurch gekennzeichnet, dass** das Identifikationsgerät (8) eine Vorrichtung für eine Kommunikation mittels Funk aufweist.

17. Verfahren zur Herstellung der Vorrichtung nach Anspruch 1, **dadurch gekennzeichnet, dass** der Schalter (9) und/oder die Verbindungsleitung (11, 44) und/oder die Halterung (19) für das Identifikationsgerät (88) durch Aufnähen oder Annähen auf oder an dem Arbeitshandschuh (14) oder dem Tragriemen verbunden wird.

18. Verfahren nach Anspruch 17, **dadurch gekennzeichnet, dass** der Arbeitshandschuh (14) oder der an der Hand (3) anordbare Tragriemen (2) ausschließlich oder überwiegend durch Nähen hergestellt wird.

19. Verfahren nach Anspruch 17 oder 18, **dadurch gekennzeichnet, dass** die Druckknöpfe (16) in den Arbeitshandschuh (14) oder in dem Tragriemen (2) eingepresst werden.

## Claims

1. An apparatus (1) for arrangement on a hand (3), having an identification device (8) arranged at the apparatus (1), wherein the apparatus (1) has a work glove (14) or a carrying strap (2) able to be arranged on the hand (3), having an identification device (8) detachably arranged at the work glove (14) or at the carrying strap (2), with which the identification device (8) is arranged at a side of the work glove (14) or the carrying strap (2) associated with a back of the hand, and a scanning procedure by means of the identification device (8) is triggerable via a switch (9), **characterised in that**
- between the switch (9) and the identification device (8) there is provided a connection line (11, 44) composed of cloth, wherein electrically conductive material (46, 47, 48, 49) is arranged in the cloth,
- at the identification device (8) there is arranged a first part (20) of at least one press fastener (16), and at the work glove (14) or at the carrying strap (2) there is arranged, in the region of the connection line (11, 44) consisting of cloth and the electrically conductive material, a second part (21) of the press fastener (16), in the form of a counterpart to the first part (20) of the press fastener (16),
- the second part (21) of the press fastener (16) forms an electrical connection with the connection line (11, 44) composed of cloth and with the conductive material (46, 47, 48, 49) arranged in the cloth.

2. An apparatus according to claim 1, **characterised in that** the identification device has the switch (9) for operation of the identification device (8) and **in that** the switch (9) is in the form of a switch (9) consisting of at least two cloth layers (41, 42, 43) in which electrically conductive material is arranged.

3. An apparatus according to any one of the preceding claims, **characterised in that** the switch (9) is arranged on a finger, in particular index finger, of the work glove (14), or on a loop (13), securable to a finger, in particular index finger, of the carrying strap (2).

4. An apparatus according to any one of the preceding claims, **characterised in that** the electrically conductive material in the cloth of the connection line (11, 44) is in the form of at least one electric line (46, 47, 48, 49).

5. An apparatus according to claim 4, **characterised in that** the at least one electric line (46, 47, 48, 49) is arranged in the connection line (11, 44), formed from fabric, in a curved or meander-shaped or wavy-lined manner or in a zigzag shape or spirally.

6. An apparatus according to any one of the preceding claims, **characterised in that** the work glove (14) or the carrying strap (2) has a holding means (19) for the detachable fastening of the identification device (8), and **in that** the holding means (19) is composed of cloth.

7. An apparatus according to claim 6, **characterised in that** the holding means (19) has a closeable and openable tab (18).

8. An apparatus according to claim 7, **characterised in that** the tab (18) has a slit (25).

9. An apparatus according to any one of the preceding claims, **characterised in that** the identification device (8) has at least one button for actuation and/or adjustment of the identification device (8).

10. An apparatus according to any one of the preceding claims, **characterised in that** at least one motion sensor is arranged in the identification device (8).

11. An apparatus according to any one of the preceding claims, **characterised in that** the press fasteners (16) are in the form of standard press fasteners.

12. An apparatus according to any one of claims 1 to 10, **characterised in that** in the first part (20), of the press fastener (16), arranged at the identification device (8) there is arranged a screw (33), and **in that** the screw (33) can be arranged in a gripping manner in an internal thread (32) arranged at or in a housing (29) of the identification device (8).

13. An apparatus according to any one of the preceding claims, **characterised in that** the first part (20), of the press fastener (16), arranged at the identification device (8) is in electrical contact with a printed circuit board (36) arranged in the identification device.

14. An apparatus according to any one of the preceding claims, **characterised in that** the identification device (8) has at least one replaceable accumulator (59).

15. An apparatus according to any one of the preceding claims, **characterised in that** the identification device (8) is in the form of a RFID reader and/or a RFID writer/reader and/or a barcode reader.

16. An apparatus according to any one of the preceding claims, **characterised in that** the identification device (8) has an apparatus for communication by radio.

17. A method of manufacturing the apparatus according to claim 1, **characterised in that** the switch (9) and/or the connection line (11, 44) and/or the holding means (19) for the identification device (88) is/are connected on or to the work glove (14) or the carrying strap by sewing thereon or thereto.

18. A method according to claim 17, **characterised in that** the work glove (14) or the carrying strap (2) able to be arranged on the hand (3) is manufactured solely or predominantly by sewing.

19. A method according to claim 17 or 18, **characterised in that** the press fasteners (16) are pressed into the work glove (14) or in the carrying strap (2).

## Revendications

1. Dispositif (1) pour disposition sur une main (3) avec un dispositif d'identification (8) disposé sur le dispositif (1), le dispositif (1) ayant un gant de travail (14) ou une sangle de portage (2) qui peut être disposé sur la main (3) avec un dispositif d'identification (8) disposé de manière amovible sur le gant de travail (14) ou sur la sangle de portage (2), dans lequel le dispositif d'identification (8) est disposé sur une face du gant de travail (14) ou la sangle de portage (2) affectée au dos de la main, et un processus de balayage avec le dispositif d'identification (8) peut être déclenché via un interrupteur (9),
**caractérisé en ce que**,
- entre l'interrupteur (9) et le dispositif d'identification (8) se trouve une ligne de raccordement (11, 44) en tissu, un matériau électriquement conducteur (46, 47, 48, 49) étant disposé dans le tissu,
- qu'une première partie (20) d'au moins un bouton poussoir (16) est agencée sur le dispositif d'identification (8), et sur le gant de travail (14) ou la sangle de portage (2) dans la zone de la ligne de raccordement (11, 44) en tissu et en matériau électriquement conducteur, une seconde partie (21) du bouton poussoir (16) est agencée en contrepartie de la première partie (20) du bouton poussoir (16),
- que la seconde partie (21) du bouton poussoir (16) établit une connexion électrique avec la ligne de raccordement (11, 44) en tissu et avec le matériau conducteur agencé dans le tissu (46, 47, 48, 49).

2. Dispositif selon la revendication 1, **caractérisé en ce que** le dispositif d'identification comporte l'interrupteur (9) pour actionner le dispositif d'identification (8), et **en ce que** l'interrupteur (9) est réalisé sous la forme d'un interrupteur (9) composé d'au moins deux couches (41, 42, 43) dans lesquelles est disposé un matériau électriquement conducteur.

3. Dispositif selon l'une des revendications précédentes, **caractérisé en ce que** l'interrupteur (9) est agencé sur un doigt, notamment l'index, du gant de travail (14) ou sur une boucle (13) de la sangle de portage (2) pouvant être fixée à un doigt, notamment à l'index.

4. Dispositif selon l'une des revendications précédentes, **caractérisé en ce que** le matériau électriquement conducteur dans le tissu de la ligne de raccordement (11, 44) est réalisé sous la forme d'au moins un conducteur électrique (46, 47, 48, 49).

5. Dispositif selon la revendication 4, **caractérisé en ce que** le au moins un conducteur électrique (46, 47, 48, 49) est disposé de manière courbe ou sinueuse ou ondulée ou en forme de zigzag ou en spirale dans la ligne de raccordement (11, 44) en tissu.

6. Dispositif selon l'une des revendications précédentes, **caractérisé en ce que** le gant de travail (14) ou la sangle de portage (2) comporte un support (19) pour maintenir de manière amovible le dispositif d'identification (8), et que le support (19) se compose de tissu.

7. Dispositif selon la revendication 6, **caractérisé en ce que** le support (19) a une languette fermable et ouvrable (18).

8. Dispositif selon la revendication 7, **caractérisé en ce que** la languette (18) présente une fente (25).

9. Dispositif selon l'une des revendications précédentes, **caractérisé en ce que** le dispositif d'identification (8) comporte au moins un bouton pour actionner et/ou régler le dispositif d'identification (8).

10. Dispositif selon l'une des revendications précédentes, **caractérisé en ce que** dans le dispositif d'identification (8) au moins un capteur de mouvement est agencé.

11. Dispositif selon l'une des revendications précédentes, **caractérisé en ce que** les boutons poussoirs (16) sont conçus comme des boutons poussoirs standards.

12. Dispositif selon l'une des revendications 1 à 10, **caractérisé en ce que** dans la première partie (20) du bouton poussoir (16) qui est agencée sur le dispositif d'identification (8), une vis (33) est agencée, et que la vis (33) peut être vissée avec serrage dans ou sur un filetage intérieur (32) agencé dans un boîtier (29) du dispositif d'identification (8).

13. Dispositif selon l'une des revendications précédentes, **caractérisé en ce que** la première partie (20) du bouton poussoir (16) qui est agencée sur le dispositif d'identification (8) est destinée à être en contact électrique avec une carte de circuit imprimé (36) disposée dans le dispositif d'identification.

14. Dispositif selon l'une des revendications précédentes, **caractérisé en ce que** le dispositif d'identification (8) comporte au moins une pile remplaçable (59).

15. Dispositif selon l'une des revendications précédentes, **caractérisé en ce que** le dispositif d'identification (8) est agencé en lecteur RFID et/ou en dispositif de lecture/écriture RFID et/ou en lecteur de code barre.

16. Dispositif selon l'une des revendications précédentes, **caractérisé en ce que** le dispositif d'identification (8) comporte un dispositif de communication par radio.

17. Procédé de réalisation du dispositif selon la revendication 1, **caractérisé en ce que** l'interrupteur (9) et/ou la ligne de raccordement (11, 44) et/ou le support (19) pour le dispositif d'identification (88) sont reliés par couture sur ou dans le gant de travail (14) ou la sangle de portage.

18. Procédé selon la revendication 17, **caractérisé en ce que** le gant de travail (14) ou la sangle de portage (2) pouvant être disposé sur la main (3) est réalisé exclusivement ou majoritairement par couture.

19. Procédé selon la revendication 17 ou 18, **caractérisé en ce que** les boutons poussoir (16) sont enfoncés par pression dans le gant de travail (14) ou dans la sangle de portage (2).
